(19)

Europäisches Patentamt

European Patent Office

Office européen des brevets

(11) **EP 4 432 629 A1**

(12) **EUROPEAN PATENT APPLICATION**

(43) Date of publication:
**18.09.2024   Bulletin 2024/38**

(21) Application number: **23161902.4**

(22) Date of filing: **14.03.2023**

(51) International Patent Classification (IPC):
***H04L 61/5084*** *(2022.01)*

(52) Cooperative Patent Classification (CPC):
**H04L 61/5084;** H04L 2101/604; H04L 2101/659;
H04L 2101/69; H04W 36/32; H04W 80/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Deutsche Telekom AG**
**53113 Bonn (DE)**

(72) Inventor: **SCHATZMAYR, Rainer**
**53229 Bonn (DE)**

(74) Representative: **Schwöbel, Thilo K. et al**
**Kutzenberger Wolff & Partner**
**Waidmarkt 11**
**50676 Köln (DE)**

Remarks:
Amended claims in accordance with Rule 137(2)
EPC.

(54) **METHOD FOR USING A USER EQUIPMENT IN A MOBILE COMMUNICATION NETWORK AND FOR PROVIDING COMMUNICATION SERVICES TO THE USER EQUIPMENT, SYSTEM OR MOBILE COMMUNICATION NETWORK, USER EQUIPMENT, ACCESS NODE ENTITY OR FUNCTIONALITY OR CORE NETWORK NODE ENTITY OR FUNCTIONALITY, PROGRAM AND COMPUTER-READABLE MEDIUM**

(57)    The invention relates to a method for using a user equipment in a mobile communication network and for providing communication services to the user equipment, wherein the mobile communication network comprises, or is associated to, an radio access network and a core network, wherein the radio access network comprises at least one access node entity or functionality and wherein the core network comprises at least one core network node entity or functionality, the access node entity or functionality having, or using, an access node identifier information,

wherein the user equipment has, or uses, a user equipment identifier information, wherein the user equipment transmits uplink data packets that are at least intended to be transmitted towards the access node entity or functionality and the access node entity or functionality receives such uplink data packets, wherein furthermore the access node entity or functionality transmits downlink data packets that are at least intended to be transmitted towards the user equipment and the user equipment receives such downlink data packets,

wherein both the uplink data packets and the downlink data packets comprise an IPv6 header information comprising an IPv6 source address portion and an IPv6 destination address portion,

wherein, in view of using the user equipment and in view of providing communication services to the user equipment, the method comprises the following steps:
-- in a first step, in uplink data packets that are transmitted by the user equipment, the used IPv6 source address portion comprises the user equipment identifier information and/or the access node identifier information,
-- in a second step, in downlink data packets that are received by the user equipment, the used IPv6 destination address portion comprises the user equipment identifier information and/or the access node identifier information.

Fig. 1

EP 4 432 629 A1

**Description**

BACKGROUND

The present invention relates a method for using a user equipment in a mobile communication network and for providing communication services to the user equipment, wherein the mobile communication network comprises, or is associated to, an radio access network and a core network, wherein the radio access network comprises at least one access node entity or functionality and wherein the core network comprises at least one core network node entity or functionality, the access node entity or functionality having, or using, an access node identifier information, wherein the user equipment has, or uses, a user equipment identifier information, wherein the user equipment transmits uplink data packets that are at least intended to be transmitted towards the access node entity or functionality and the access node entity or functionality receives such uplink data packets, wherein furthermore the access node entity or functionality transmits downlink data packets that are at least intended to be transmitted towards the user equipment and the user equipment receives such downlink data packets, wherein both the uplink data packets and the downlink data packets comprise an IPv6 header information comprising an IPv6 source address portion and an IPv6 destination address portion.

Furthermore, the present invention relates to a system or mobile communication network for using a user equipment in a mobile communication network and for providing communication services to the user equipment, wherein the mobile communication network comprises, or is associated to, an radio access network and a core network, wherein the radio access network comprises at least one access node entity or functionality and wherein the core network comprises at least one core network node entity or functionality, the access node entity or functionality having, or using, an access node identifier information, wherein the user equipment has, or uses, a user equipment identifier information, wherein the user equipment transmits uplink data packets that are at least intended to be transmitted towards the access node entity or functionality and the access node entity or functionality receives such uplink data packets, wherein furthermore the access node entity or functionality transmits downlink data packets that are at least intended to be transmitted towards the user equipment and the user equipment receives such downlink data packets, wherein both the uplink data packets and the downlink data packets comprise an IPv6 header information comprising an IPv6 source address portion and an IPv6 destination address portion.

Additionally, the present invention relates to a user equipment, especially as part of a system or connected to an inventive mobile communication network, for using a user equipment in the mobile communication network and for providing communication services to the user equipment, wherein the mobile communication network comprises, or is associated to, an radio access network and a core network, wherein the radio access network comprises at least one access node entity or functionality and wherein the core network comprises at least one core network node entity or functionality, the access node entity or functionality having, or using, an access node identifier information, wherein the user equipment has, or uses, a user equipment identifier information, wherein the user equipment transmits uplink data packets that are at least intended to be transmitted towards the access node entity or functionality and the access node entity or functionality receives such uplink data packets, wherein furthermore the access node entity or functionality transmits downlink data packets that are at least intended to be transmitted towards the user equipment and the user equipment receives such downlink data packets, wherein both the uplink data packets and the downlink data packets comprise an IPv6 header information comprising an IPv6 source address portion and an IPv6 destination address portion

Additionally, the present invention relates to an access node entity or functionality or to a core network node entity or functionality, especially as part of a system or connected to an inventive mobile communication network, for using a user equipment in the mobile communication network and for providing communication services to the user equipment, wherein the mobile communication network comprises, or is associated to, an radio access network and a core network, wherein the radio access network comprises the access node entity or functionality and wherein the core network comprises the core network node entity or functionality, the access node entity or functionality having, or using, an access node identifier information,

wherein the user equipment has, or uses, a user equipment identifier information, wherein the user equipment transmits uplink data packets that are at least intended to be transmitted towards the access node entity or functionality and the access node entity or functionality receives such uplink data packets, wherein furthermore the access node entity or functionality transmits downlink data packets that are at least intended to be transmitted towards the user equipment and the user equipment receives such downlink data packets, wherein both the uplink data packets and the downlink data packets comprise an IPv6 header information comprising an IPv6 source address portion and an IPv6 destination address portion.

Furthermore, the present invention relates to a program and to a computer-readable medium for using a user equipment in a mobile communication network and for providing communication services to the user equipment according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies. Such mobile communication networks that are purely or predominantly based on terrestrial infrastructures of the radio access network are typically organized throughout a country (or a part of or a region within a country) in a repeating pattern of typically stationary (radio) cells (and associated base station entities) which typically belong to (or are used by or associated or assigned to) a mobile network operator (MNO).

Modern mobile communication networks, such as 5G systems, especially using 5G NR (new radio) radio (access) technology, are evolving using air-based and/or space-based infrastructure, hence relying, at least partly, on non-terrestrial infrastructure, especially in the form of satellites and/or high altitude platforms, HAPs, thereby realizing non-terrestrial networks, NTN (or satellite communication networks). Examples of such air-based and/or space-based network infrastructure include, e.g., mobile satellite connectivity with low earth orbit (LEO) satellites, medium earth orbit (MEO) satellites and/or geostationary earth orbit (GEO) satellites and also so-called high-altitude platforms or high-altitude pseudo-satellites (HAPS).

Such non-terrestrial networks are able to provide global cellular connectivity to handheld devices or user equipments, typically using satellite coverage with quasi-earth fixed beams, i.e. radio coverage is attempted to be provided, for a certain considered (quasi) fixed geographical area (of a considered radio cell), in an almost statical or almost unchanged manner - this, however, being possible, due to the movement of such satellites relative to the earth surface, only during certain time intervals of, at most, the order of a couple of minutes.

Such quasi-earth-fixed radio cells are in contrast to using earth-moving beams providing radio coverage in a moving geographical area (earth-moving radio cell), that is moving, relative to the earth surface, essentially together with the movement of the satellite (or the high-altitude platform device).

It is expected that mobile communication networks will be expanding to use NTN (non-terrestrial networks) to improve radio coverage of user equipments. This is part of several working groups at 3GPP Rel.17 and Rel.18.

In terrestrial mobile communication networks, the typical approach for providing radio coverage to a certain geographic area and/or to a certain number of user equipments is by means of using base station entities that are typically stationary and wherein each base station entity serves a radio cell (or a plurality of radio cells) that is (are) likewise typically rather stationary, especially relative to an antenna entity of or associated with the considered base station entity. Obviously, in case that a plurality of such base station entities are required - e.g. in view of a larger geographic area to be covered and/or in view of a higher (peak) demand for mobile communication services to be provided - a plurality of such mostly stationary base station entities are used. In case of a mobile user or user equipment being geographically moving sufficiently to leave one (rather stationary) radio cell and to enter another (rather stationary) radio cell, i.e. in case of a relative movement between such user equipments and such base station entities, there will be the need to perform mobility procedures, especially handover procedures, at least regarding user equipments currently being in a certain mode, such as connected mode.

As the mobility procedures applied in or related to non-terrestrial networks largely correspond to such technologies known from terrestrial networks (TN), - due to the necessary movement (unless geo-stationary satellites would be used that are necessarily associated with other drawbacks including, especially, latency) of at least the antenna entities or functionalities (i.e. satellites) related to base station entities of non-terrestrial networks, the relative movement between such base station entities (or, at least, antenna entities or functionalities located on satellites) and the user equipments to be served - mobility procedures and especially handover procedures are likewise required to be performed. Hence, in contrast to the typical situation in terrestrial networks, for non-terrestrial networks, it is the radio cells that somehow move relative to mobile users or user equipments, whereas in terrestrial networks it is the other way round.

One of the challenges there is that the amount of signaling (in 3GPP terms: control plane) information to be exchanged inside the network will grow considerably. In traditional terrestrial networks, as used today for 4G and 5G, the base stations that the user equipment (usually a mobile phone, or data card) connects to, unless the user equipment moves, remains the same base station. This changes with satellite-based systems as Low-Earth-Orbit (LEO) satellites remain in the user equipment horizon for only a few minutes. This results in much more handovers of the connection between the user equipment and the satellite than in the case of a terrestrial network.

The increase in the number of handovers results in a severe increase in signaling traffic between satellites and between satellites and the earth ground station. The increase of traffic increases the amount of processing to be performed inside the satellite and the amount of information to be transmitted between satellites. The traffic increase in its turn increases the power consumption of the satellites.

In the context of mobility and using IPv6, solutions exist where the communication is always virtually independent of the current position of mobile nodes; hence, mobile IPv6 allows such mobile nodes to be reachable everywhere under the same IPv6 address that need, however, to be complemented by means of care-of-addresses and the use of IPv6 extension headers. Furthermore, Proxy Mobile IPv6 has been proposed which provides network-based mobility management.

Hence, there is a need to reduce the required signaling traffic (or overhead traffic), especially required for mobility purposes and especially related to (the need to perform) handover procedures that are inherently necessary for a user equipment to perform from one satellite to another satellite in non-terrestrial networks; such reduction of signaling traffic also leads to a reduction of required processing to be performed inside satellites and the associated usage of limited air interface capacity.

SUMMARY

An object of the present invention is to provide a technically simple, effective and cost-effective solution for using a user equipment in a mobile communication network and for providing communication services to the user equipment in an efficient manner-especially for performing a handover procedures (especially in a more efficient manner) - , wherein the user equipment transmits uplink data packets that are at least intended to be transmitted towards an access node entity or functionality, wherein furthermore the access node entity or functionality transmits downlink data packets that are at least intended to be transmitted towards the user equipment, wherein both the uplink data packets and the downlink data packets comprise an IPv6 header information comprising an IPv6 source address portion and an IPv6 destination address portion. A further object of the present invention is to provide a corresponding system or mobile communication network, a corresponding user equipment, a corresponding access node entity or functionality or a corresponding core network node entity or functionality, and a corresponding program and computer-readable medium.

The object of the present invention is achieved by a method for using a user equipment in a mobile communication network and for providing communication services to the user equipment, wherein the mobile communication network comprises, or is associated to, an radio access network and a core network, wherein the radio access network comprises at least one access node entity or functionality and wherein the core network comprises at least one core network node entity or functionality, the access node entity or functionality having, or using, an access node identifier information,

wherein the user equipment has, or uses, a user equipment identifier information, wherein the user equipment transmits uplink data packets that are at least intended to be transmitted towards the access node entity or functionality and the access node entity or functionality receives such uplink data packets, wherein furthermore the access node entity or functionality transmits downlink data packets that are at least intended to be transmitted towards the user equipment and the user equipment receives such downlink data packets,
wherein both the uplink data packets and the downlink data packets comprise an IPv6 header information comprising an IPv6 source address portion and an IPv6 destination address portion,
wherein, in view of using the user equipment and in view of providing communication services to the user equipment, the method comprises the following steps:

-- in a first step, in uplink data packets that are transmitted by the user equipment, the used IPv6 source address portion comprises the user equipment identifier information and the access node identifier information,
-- in a second step, in downlink data packets that are received by the user equipment, the used IPv6 destination address portion comprises the user equipment identifier information and the access node identifier information.

It is thereby advantageously possible, according to the present invention, to provide the possibility to reduce the amount of signaling

-- between user equipments and (terrestrial and/or non-terrestrial) access node entities or functionalities, especially satellites and/or base station entities, and/or
-- between, or among, (terrestrial and/or non-terrestrial) access node entities or functionalities, especially satellites and/or base station entities, and/or
-- between access node entities or functionalities, especially satellites and/or base station entities, and earth ground stations (or core network node entities or functionalities).

Especially, it is advantageously possible, according to the present invention, to use the IPv6 addresses to signal both the user equipment identity and the satellite (or access node entity or functionality) entity and make use of simple IPv6 packet routing to handle handover scenarios. This reduces the amount of signaling information.

According to the present invention, it is thereby especially advantageously possible to realize an optimized mobility management, especially in a non-terrestrial network environment, where it is possible to realize a greater efficiency when performing handover procedures. This is especially relevant in non-terrestrial networks as, in such non-terrestrial networks, the number, or the rate, of handover procedures is (necessarily) typically increased compared to terrestrial networks; however, the principles according to the present invention are likewise able to be applied in purely terrestrial networks.

According to the present invention, a user equipment is considered that is connected to, or part of, a mobile communication network that serves the user equipment with communication services. The mobile communication network comprises, or is associated to, an radio access network and a core network. Typically, in a terrestrial network, the user equipment is served (or provided with radio coverage) by a base station entity of the mobile communication network. In a terrestrial mobile communication network (or, in a mobile communication network comprising a terrestrial access network), the base station entity typically corresponds to a stationary entity or access node entity or functionality. In a non-terrestrial mobile communication network (or, in a mobile communication network comprising a non-terrestrial access network), the base station entity is either typically located (completely) aboard a satellite or high-altitude platform, or the base station entity is located at least partly - especially an antenna entity or functionality thereof or associated thereto - aboard a satellite. Hence, the mobile communication network provides the user equipment with communication services by means of the radio access network that comprises at least one access node entity or functionality (but typically a plurality of access node entities or functionalities) and wherein the core network comprises at least one core network node entity or functionality. According to the present invention, the access node entity or functionality has, or uses, an access node identifier information, and the user equipment has, or uses, a user equipment identifier information.

Furthermore, uplink data packets are transported (or transmitted) from the user equipment to or towards the access node entity or functionality, i.e. typically the user equipment transmits uplink data packets that are at least intended to be transmitted towards (or via) the access node entity or functionality; of course, the respective access node entity or functionality receives such uplink data packets.

Furthermore, downlink data packets are transported (or transmitted) from the access node entity or functionality to the user equipment, i.e. typically the access node entity or functionality transmits (or forwards) downlink data packets that are at least intended to be transmitted towards the user equipment; of course, the user equipment receives such downlink data packets,

According to the present invention, IPv6 data packets are used between the user equipments and the access node entities or functionalities. Hence, both the uplink data packets and the downlink data packets comprise an IPv6 header information, especially the 40 byte IPv6 header information, comprising an IPv6 source address portion and an IPv6 destination address portion (of 128 bits each).

Furthermore according to the present invention, in view of using the user equipment and in view of providing communication services to the user equipment, the inventive method comprises or involves:

-- in uplink data packets (that are transmitted by the user equipment) the used IPv6 source address portion comprises the user equipment identifier information and the access node identifier information, and
-- in downlink data packets (that are received by the user equipment), the used IPv6 destination address portion comprises the user equipment identifier information and the access node identifier information.

It is especially advantageous, according to the present invention, to be able - especially by means of the IPv6 source address portion (of the IPv6 header information) of an uplink data packet and/or by means of the IPv6 destination address portion (of the IPv6 header information) of an uplink data packet comprising the access node identifier information, despite the access node entity or functionality only being a forwarding node regarding the transport of the IPv6 data packets - to use an identifier information related to the access node (or access node entity or functionality) used (or to be used) for transporting the data packet as part of the IPv6 address portion. To use an identifier information of an intermediate (or forwarding) node as part of the IPv6 header information (regarding either the source or the destination address portion) is not the case in conventionally known processing of IPv6 data packets.

The present invention is focused on low earth orbit (LEO) satellites or high-altitude platform entities which typically are located up to 300 km until 1500 km above ground (especially 400 km to 1000 km), and are, typically, traveling at a velocity of around 7 km/s - at least regarding satellites -, resulting in a round trip time about the globe of typically about 100 minutes.

According to the present invention, it is advantageously possible and preferred that the IPv6 header information of both the uplink data packets and the downlink data packets correspond to 40 byte IPv6 header information, and wherein especially not extension headers need to be used to indicate the IPv6 source and/or destination address portions, and/or that the radio access network corresponds to

-- a terrestrial access network, or
-- a non-terrestrial access network, or
-- in part a terrestrial access network and in another part a non-terrestrial access network,
wherein the at least one access node entity or functionality, but preferably a plurality of access node entities or functionalities, corresponds to -- a base station entity being part of a non-terrestrial network, especially a base station entity aboard a satellite or aboard a high-altitude platform, or
-- an antenna entity or functionality being part of a non-terrestrial network, especially an antenna entity or functionality aboard a satellite or aboard a high-altitude platform, the antenna entity or functionality especially being associated or assigned to a terrestrial base station entity, or
-- a base station entity being part of a terrestrial network.

It is thereby advantageously possible, according to the present invention, to apply the inventive method to both terrestrial (access) networks and non-terrestrial (access) network.

According to the present invention, it is advantageously furthermore possible and preferred that in a downlink data packet that is received - in view of being forwarded to the user equipment via the access node entity or functionality - by a reception network node of the mobile communication network, especially the at least one core network node entity or functionality, both the user equipment identifier information and the access node identifier information is used as part of the IPv6 destination address portion,
wherein especially the user equipment identifier information precedes the access node identifier information as part of the IPv6 destination address portion.

It is thereby advantageously possible to realize and implement the inventive method in a comparatively simple and efficient manner.

According to the present invention, it is furthermore advantageously possible and preferred that in a downlink data packet that is transmitted by the reception network node, especially the at least one core network node entity or functionality, - in view of being forwarded to the user equipment via the access node entity or functionality and after having been received by the reception network node - likewise both the user equipment identifier information and the access node identifier information is used as part of the IPv6 destination address portion,
wherein especially the access node identifier information precedes the user equipment identifier information as part of the IPv6 destination address portion.

It is thereby advantageously possible to realize and implement the inventive method in a comparatively simple and efficient manner.

According to the present invention, it is furthermore advantageously possible and preferred that in a downlink data packet that is transmitted by the access node entity or functionality - in view of being forwarded to the user equipment, especially a user equipment that is still connected to the respective access node entity or functionality and after the downlink data packet having been received by the access node entity or functionality - likewise both the user equipment identifier information and the access node identifier information is used as part of the IPv6 destination address portion, wherein especially the user equipment identifier information precedes the access node identifier information as part of the IPv6 destination address portion.

It is thereby advantageously possible to realize and implement the inventive method in a comparatively simple and efficient manner.

Furthermore, it is advantageously possible and preferred according to the present invention that, in case of a handover procedure of the user equipment from the access node entity or functionality to a further access node entity or functionality,

-- the further access node entity or functionality creates, especially prior to sending a handover confirmation to the access node entity or functionality, an IPv6 route pointing to the user equipment, and
-- the access node entity or functionality creates, especially prior to sending a handover confirmation to the user equipment, an internal IPv6 route that results in forwarding all IPv6 data packets to the further access node entity or functionality that are pointing to the user equipment as their destination.

It is thereby advantageously possible to realize a handover procedure in a more efficient manner.

According to the present invention, it is furthermore advantageously possible and preferred that in case of the handover procedure of the user equipment from the access node entity or functionality to the further access node entity or functionality, the user equipment uses, in IPv6 address portions of data packets, the user equipment identifier information and the access node identifier information of either the access node entity or functionality or of the further access node entity or functionality, respectively, if connected to the access node entity or functionality or to the further access node entity or functionality,
wherein especially, the user equipment uses, in IPv6 source address portions of uplink data packets, the user equipment identifier information and the access node identifier information of either the access node entity or functionality or of the further access node entity or functionality, respectively, if connected to the access node entity or functionality or to the further access node entity or functionality.

It is thereby advantageously possible to realize a handover procedure in a more efficient manner.

Furthermore, the present invention relates to a system or to a mobile communication network for using a user equipment in a mobile communication network and for providing communication services to the user equipment, wherein the mobile communication network comprises, or is associated to, an radio access network and a core network, wherein the radio access network comprises at least one access node entity or functionality and wherein the core network comprises at least one core network node entity or functionality, the access node entity or functionality having, or using, an access node identifier information, wherein the user equipment has, or uses, a user equipment identifier information, wherein the user equipment transmits uplink data packets that are at least intended to be transmitted towards the access node entity or functionality and the access node entity or functionality receives such uplink data packets, wherein furthermore the access node entity or functionality transmits downlink data packets that are at least intended to be transmitted towards the user equipment and the user equipment receives such downlink data packets, wherein both the uplink data packets and the downlink data packets comprise an IPv6 header information comprising an IPv6 source address portion and an IPv6 destination address portion, wherein, in view of using the user equipment and in view of providing communication services to the user equipment, the system or the mobile communication network in configured such that:

-- in uplink data packets that are transmitted by the user equipment, the used IPv6 source address portion comprises the user equipment identifier information and the access node identifier information,
-- in downlink data packets that are received by the user equipment, the used IPv6 destination address portion comprises the user equipment identifier information and the access node identifier information.

Furthermore, the present invention relates to a user equipment, especially as part of a system or connected to an inventive mobile communication network, for using a user equipment in the mobile communication network and for providing communication services to the user equipment, wherein the mobile communication network comprises, or is associated to, an radio access network and a core network, wherein the radio access network comprises at least one access node entity or functionality and wherein the core network comprises at least one core network node entity or functionality, the access node entity or functionality having, or using, an access node identifier information, wherein the user equipment has, or uses, a user equipment identifier information, wherein the user equipment transmits uplink data packets that are at least intended to be transmitted towards the access node entity or functionality and the access node entity or functionality receives such uplink data packets, wherein furthermore the access node entity or functionality transmits downlink data packets that are at least intended to be transmitted towards the user equipment and the user equipment receives such downlink data packets, wherein both the uplink data packets and the downlink data packets comprise an IPv6 header information comprising an IPv6 source address portion and an IPv6 destination address portion, wherein, in view of using the user equipment and in view of providing communication services to the user equipment, the user equipment is configured such that:

-- in uplink data packets that are transmitted by the user equipment, the used IPv6 source address portion comprises the user equipment identifier information and the access node identifier information,
-- in downlink data packets that are received by the user equipment, the used IPv6 destination address portion comprises the user equipment identifier information and the access node identifier information.

Furthermore, the present invention relates to an access node entity or functionality or core network node entity or functionality, especially as part of an inventive system or connected to an inventive mobile communication network, for using a user equipment in the mobile communication network and for providing communication services to the user equipment, wherein the mobile communication network comprises, or is associated to, an radio access network and a core network, wherein the radio access network comprises the access node entity or functionality and wherein the core network comprises the core network node entity or functionality, the access node entity or functionality having, or using, an access node identifier information, wherein the user equipment has, or uses, a user equipment identifier information, wherein the user equipment transmits uplink data packets that are at least intended to be transmitted towards the access node entity or functionality and the access node entity or functionality receives such uplink data packets, wherein furthermore the access node entity or functionality transmits downlink data packets that are at least intended to be transmitted towards the user equipment and the user equipment receives such downlink data packets, wherein both the uplink data packets and the downlink data packets comprise an IPv6 header information comprising an IPv6 source address portion and an IPv6 destination address portion, wherein, in view of using the user equipment and in view of providing communication services to the user equipment, the access node entity or functionality or the core network node entity or functionality is/are configured such that:

-- in uplink data packets that are transmitted by the user equipment, the used IPv6 source address portion comprises the user equipment identifier information and the access node identifier information,
-- in downlink data packets that are received by the user equipment, the used IPv6 destination address portion comprises the user equipment identifier information and the access node identifier information.

Additionally, the present invention relates to a program comprising a computer readable program code which, when executed on a computer and/or on a user equipment and/or on a network node of a mobile communication network and/or on an access node entity or functionality and/or on a core network node entity or functionality, or in part on a user equipment and/or in part on a network node of a mobile communication network and/or in part on an access node entity or functionality and/or in part on a core network node entity or functionality, causes the computer and/or the user equipment and/or the network node of the mobile communication network and/or the access node entity or functionality and/or the core network node entity or functionality, to perform the inventive method.

Still additionally, the present invention relates to a computer-readable medium comprising instructions which when executed on a computer and/or on a user equipment and/or on a network node of a mobile communication network and/or on an access node entity or functionality and/or on a core network node entity or functionality, or in part on a user equipment and/or in part on a network node of a mobile communication network and/or in part on an access node entity or functionality and/or in part on a core network node entity or functionality, causes the computer and/or the user equipment and/or the network node of the mobile communication network and/or the access node entity or functionality and/or the core network node entity or functionality, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

BRIEF DESCRIPTION OF THE DRAWINGS

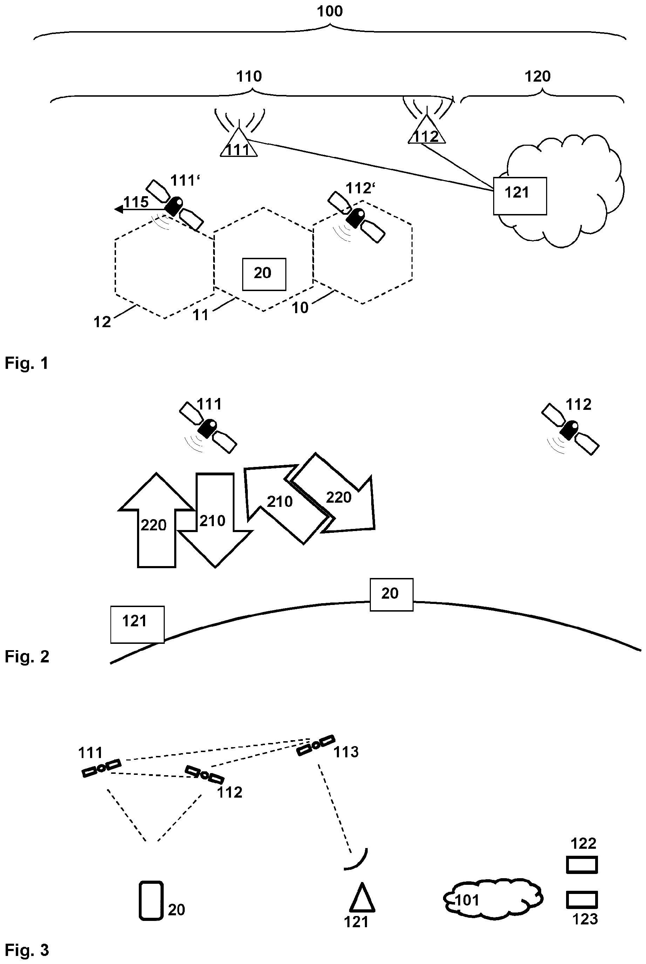

Figure 1 schematically illustrates the situation of a user equipment in a mobile communication network comprising a non-terrestrial network as its radio access network or, at least, as a part of its radio access network, the mobile communication network also comprising a core network, the radio access network comprising at least one access node entity or functionality and the core network comprising at least one core network node entity or functionality, and the user equipment transmitting uplink data packets that are at least intended to be transmitted towards the access node entity or functionality (and the access node entity or functionality receiving such uplink data packets) as well as the access node entity or functionality transmitting downlink data packets that are at least intended to be transmitted towards the user equipment (and the user equipment receiving such downlink data packets).

Figure 2 likewise schematically illustrates the situation of the user equipment being served by the base station entity or access node entity or functionality (or by the plurality of base station entities / plurality of access node entities or functionalities), wherein radio coverage is provided (sequentially) by the first and second antenna entities or functionalities especially located on different satellites.

Figure 3 likewise schematically illustrates the situation of the user equipment being served by a plurality of base station entities or access node entities or functionalities.

DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a user equipment 20 is schematically shown in a mobile communication network 100. In the example shown, the mobile communication network 100 comprises an access network 110 and a core network 120. The mobile communication network 100 is preferably a cellular telecommunications network comprising typically a plurality of network cells (or radio cells). According to the present invention, the mobile communication network 100 comprises or uses or is associated or assigned to a radio access network 110, and the radio access network 110 (of the mobile communication network 100) comprises at least one base station entity, but typically a plurality of base station entities. Figure 1 schematically and exemplarily shows a first base station entity 111 and a second base station entity 112. The mobile communication network 100 (or telecommunications network 100) - or its (radio) access network 110 - is or at least comprises a non-terrestrial network in view of serving or providing radio coverage to the user equipment 20. E.g., the user equipment 20 is served by the (first) base station entity 111 being part of that non-terrestrial network. A first antenna entity or functionality 111' (or (first) access node entity or functionality 111') and at least a second antenna entity or functionality 112' (or (second) access node entity or functionality 112') are also part of the non-terrestrial network or of the (radio) access network 110. In Figure 1, the first and second antenna entities or functionalities 111', 112' or first and second access node entities or functionalities 111', 112' are schematically represented as either being satellite-based, or based on a high-altitude platform. Figure 1 also shows that the mobile communication network comprises the core network 120, the core network 120 comprising at least one core network node entity or functionality 121.

According to the representation in Figure 1, exemplarily, the first and second antenna entities or functionalities 111', 112' or the first and second access node entities or functionalities 111', 112' are part of different satellites or of different high-altitude platforms. The first and second access node entities or functionalities 111', 112' or antenna entities or functionalities 111', 112', as represented in Figure 1, might be, respectively, part of the (first) base station entity 111 and of the second base station entity 112 (and especially the first and second access node entities or functionalities 111', 112' or base station entities 111, 112 are part of the different satellites or high-altitude platforms. Primarily, Figure 1 shows the situation that at least part of the first base station entity 111 is not part of a satellite (i.e. part of or (completely) integrated with the corresponding (first) access node entity or functionality 111' or antenna entity or functionality 111') but, especially, earth-bound, and - likewise - that at least part of the second base station entity 112 is not part of a satellite (i.e. part of or (completely) integrated with the corresponding (second) access node entity or functionality 112' or antenna entity or functionality 111') but, especially, earth-bound. However, according to the present invention, also the situation is considered (not shown in Figure 1 but in the subsequent Figures), that the functionality of the respective base station entity 111, 112 is indeed integrated, especially as part of a satellite, with the respective access node entity or functionality 111', 112' or the respective antenna entity or functionality 111', 112'.

The first access node entity or functionality 111' is moving relative to the earth surface along a direction of movement which is schematically indicated by reference sign 115 in Figure 1. Likewise, the second access node entity or functionality 112' is moving relative to the earth surface along a direction of movement (not specifically indicated in Figure 1); the direction of movement (or the path of movement) of the second access node entity or functionality 112' might be almost parallel or identical or laterally translated with respect to the direction of movement (or the path of movement) 115 of the first access node entity or functionality 111'; alternatively, the directions of movement (or paths of movement) of both access node entities or functionalities 111', 112' could be provided intersecting (or crossing each other). However (or whatever) their direction of movement (or path of movement), Figure 1 represents a situation where, the first and second access node entities or functionalities 111', 112' are able to provide (with or using the (first) base station entity 111 and/or the second base station entity 112) radio coverage to a specific considered geographical area that corresponds to a quasi-earth-fixed radio cell, or, alternatively to an earth-moving radio cell. Examples of quasi-earth-fixed radio cells are indicated or designated, in Figure 1, by means of reference signs 10, 11, and 12, designating a first earth-fixed radio cell 10, a second earth-fixed radio cell 11, and a third earth-fixed radio cell 12.

The user equipment 20 typically transmits uplink data packets that are at least intended to be transmitted towards the corresponding access node entity or functionality 111'/112' (and the respective access node entity or functionality 111', 112' receiving such uplink data packets) as well as the respective access node entity or functionality 111', 112' transmitting downlink data packets that are at least intended to be transmitted towards the user equipment 20 (and the user equipment 20 receiving such downlink data packets).

This is schematically shown in Figure 2, which exemplarily shows the (first) base station entity 111 (now, and in contrast to the representation of Figure 1, (completely) abord a satellite) and the (second) base station entity 112 (likewise in contrast to the representation of Figure 1, (completely) abord a satellite). In the context of the present invention, and especially in case that the respective base station entity is completely abord a satellite (i.e. the base station is located inside the satellite, and especially LEO (low earth orbit) satellites are used), such satellite or base station entity is also referred to by the term access node entity or functionality, i.e. first access node entity or functionality 111, second access node entity or functionality 112, and the like. Figure 2 also shows the core network node entity or functionality 121 (being part of the core network 120 of the mobile communication network 100) as well as the user equipment 20 as being earth-bound.

Especially, Figure 2 shows the communication of the user equipment 20: The user equipment 20 transmits uplink data packets 210 that are at least intended to be transmitted towards the (first) access node entity or functionality 111 (right-side arrow represented in Figure 2 directing from the user equipment 20 towards the (first) access node entity or functionality 111 and being indicated by means of reference sign 210); correspondingly, the (first) access node entity or functionality 111 receives such uplink data packets 210. Furthermore, the (first) access node entity or functionality 111 transmits downlink data packets 220 that are at least intended to be transmitted towards the user equipment 20 (right-side arrow represented in Figure 2 directing from the (first) access node entity or functionality 111 towards the user equipment 20 and being indicated by means of reference sign 220); correspondingly, the user equipment 20 receives such downlink data packets 220. While the uplink data packets 210 are sent, by the user equipment 20, towards the (first) access node entity or functionality 111, the (first) access node entity or functionality 111 is, typically, not the final destination of such uplink data packets 210; hence such uplink data packets 210 are further transmitted (in the considered exemplary situation shown in Figure 2), by the (first) access node entity or functionality 111, towards the core network node entity or functionality 121 (cf. left-side arrow represented in Figure 2 directing from the (first) access node entity or functionality 111 towards the core network node entity or functionality 121 and being indicated by means of reference sign 210). Likewise, in the opposite direction, downlink data packets 220 are transmitted, by the core network node entity or functionality 121 towards the (first) access node entity or functionality 111 (cf. left-side arrow represented in Figure 2 directing from the core network node entity or functionality 121 towards the (first) access node entity or functionality 111 and being indicated by means of reference sign 220).

Figure 3 likewise schematically illustrates the situation of the user equipment 20 being served by a plurality of base station entities 111, 112, 113 or access node entities or functionalities 111, 112, 113 being shown abord of satellites. The core network node 121 is likewise schematically shown as an earth ground station that is connected, via an IP network 101, exemplarily towards an external IP endpoint 122 and/or towards an internal IP endpoint 123.

According to the present invention, the IPv6 protocol (or IPv6 routing) is used regarding the communication between at least

-- the core network node entity or functionality 121 (and also the external IP endpoint 122 and/or the internal IP endpoint 123) on the one hand, and,
-- on the other hand, the access node entities or functionalities (or base station entities) 111, 112, 113 as well as the user equipment 20.

Hence, according to the present invention, it is assumed that the satellite communication between satellites (i.e. between the base station entities 111, 112, 113 or access node entities or functionalities 111, 112, 113) and between satellites and the earth ground station, or the plurality of earth ground stations (i.e. the core network node entity or functionality 121 and also the external IP endpoint 122 and/or the internal IP endpoint 123 as well as the user equipment 20 or the plurality of (served) user equipments), is based on IPv6 routing. Furthermore, IPv6 routing protocols are used to implement this routing.

Furthermore according to the present invention, the user equipment 20 (i.e. all participating user equipments) only receive IPv6 addresses (and especially no IPv4 addresses), and it is assumed that current IPv4 $\Leftrightarrow$ IPv6 mechanisms used in mobile IPv6 only networks are used to provide IPv4 services if such is required.

Furthermore according to the present invention, the (first) access node entity or functionality 111 (or (first) base station entity 111) has (or uses) an access node identifier information (i.e. an identifier specifically assigned to such (first) access node entity or functionality 111), and, of course, likewise the other access node entities or functionalities 112, 113 are having (or using) respective pieces of access node identifier information (i.e. identifiers being different from each other).

Likewise, the user equipment 20 has, or uses, a user equipment identifier information (i.e. an identifier specifically assigned to the user equipment 20).

Furthermore according to the present invention, both the uplink data packets 210 and the downlink data packets 220, respectively, comprise an IPv6 header information comprising an IPv6 source address portion and an IPv6 destination address portion, wherein - in view of using the user equipment 20 and in view of providing communication services to the user equipment 20 - the inventive method comprises the steps of:

-- using, in uplink data packets 210 (that are transmitted by the user equipment 20), the user equipment identifier information and the access node identifier information in the IPv6 source address portion (i.e. in such uplink data packets 210, the IPv6 source address portion comprises the user equipment identifier information and the access node identifier information), and furthermore
-- using, in downlink data packets 220 (that are received by the user equipment 20), the user equipment identifier information and the access node identifier information in the IPv6 destination address portion (i.e. in such downlink data packets 220, the IPv6 destination address portion comprises the user equipment identifier information and the access node identifier information).

This advantageously provides the possibility, according to the present invention, that essentially the IPv6 addresses (of the header information of such uplink or downlink data packets 210, 220) are used to signal the identity of the user equipment 20 and the satellites 111, 112, 113 (or access node entities or functionalities 111, 112, 113), thereby providing the possibility to make use of simple IPv6 packet routing to handle handover scenarios; this reduces the amount of signaling information considerably.

According to the present invention, the IPv6 header information (of both the uplink data packets 210 and the downlink data packets 220) referred to according to the present invention especially corresponds to the 40 byte (i.e. 320 bit) IPv6 header information, i.e. the standard header information of IPv6 packets (i.e. comprising a version indication (of 4 bits), a traffic class indication (of 8 bit), a flow label indication (of 20 bit), a payload length indication (of 16 bit), a next header indication (of 8 bit), a hop limit indication (of 8 bit) as well as the source and destination address portions (of 128 bit each)).

Hence, regarding the use of such inventive handover-related addressing or such inventive handover-implementing usage of IPv6 addressing, there is no requirement to use extension headers to indicate the IPv6 source and/or destination address portions referred to above. This also provides the advantage that there is no inherent requirement, according to the present invention, to use a different (especially extended or additionally extended) IPv6 header information (which would, typically, reduce the available payload content of a considered data packet without such (additional) extension header); however, the use of IPv6 extension headers (as part of the uplink and/or the downlink data packets 210, 220) is by no means restricted or interdicted according to the present invention; simply, additional extension headers are not required.

While in Figures 1, 2 and 3, the radio access network 110 is primarily and exemplarily shown as a non-terrestrial network (or, at least, as comprising a non-terrestrial network part), according to the present invention, the radio access network (110) is susceptible to correspond either to a terrestrial access network, or to (of course) a non-terrestrial access network, or to in part a terrestrial access network and in another part a non-terrestrial access network.

Furthermore (and independently from whether the radio access network 110 being a terrestrial network or a non-terrestrial network), the at least one access node entity or functionality 111 (but preferably a plurality of access node entities or functionalities) corresponds to a base station entity being part of a terrestrial network (despite not being represented as such in Figures 1 to 3); hence, the present invention is also applicable to terrestrial mobile communication networks. Alternatively, the at least one access node entity or functionality 111 (but preferably a plurality of access node entities or functionalities) corresponds to a base station entity being part of a non-terrestrial network, especially a base station entity (being partly or completely) aboard a satellite or aboard a high-altitude platform, or to an antenna entity or functionality being part of a non-terrestrial network, especially an antenna entity or functionality aboard a satellite or aboard a high-altitude platform, the antenna entity or functionality especially being associated or assigned to a terrestrial base station entity.

According to the present invention, IPv6 addresses (i.e. the IPv6 header information, comprising an IPv6 source address portion and an IPv6 destination address portion) are used to signal - by means of the user equipment identifier information - the user equipment identity and - by means of the access node identifier information - the satellite identity being used. This advantageously results in the possibility to make use of simple IPv6 packet routing to handle handover scenarios. This reduces the amount of signaling information.

The IPv6 address used at the user equipment 20 (i.e. the IPv6 address information used in the IPv6 source address portion of the header information of an uplink data packet 210) are typically assigned by the mobile- and satellite-network to the user equipment 20; this can be done in multiple ways: dynamic allocation via 3GPP context, dynamic host configuration protocol, DHCP, methods, router advertisement, RA, methods. The IPv6 address used (i.e. the IPv6 address information used in the IPv6 source address portion of the header information of the header information of an uplink data packet 210) can also be self-allocated as the user equipment 20 might know all of the following: the network prefix (of the network) it is connected to, the user equipment identifier information (i.e. UE ID) - in this case its own identity -, and the satellite (identity, i.e. the access node identifier information of the access node entity or functionality 111) it is connected to.

The mechanisms as such - i.e. how such (IPv6) addresses are allocated - are conventionally known.

As it is conventionally known, the IPv6 address allocated to the user equipment 20 needs to have 128 bits.

According to the present invention and regarding a data packet to or from the user equipment 20, the IPv6 address portion - in the IPv6 header information (of that IPv6 data packet) - that is related to (or that indicates) the user equipment 20 comprises the user equipment identifier information and an access node identifier information (typically the access node identifier information of the access node entity or functionality 111, 112, 113 presently serving the user equipment 20, or, alternatively, the access node identifier information of the access node entity or functionality 111, 112, 113 that previously served the user equipment 20 or that will subsequently serve the user equipment 20). This IPv6 address portion being related to the considered user equipment 20 typically corresponds - in uplink data packets (210) - to the IPv6 source address portion, and, in - in downlink data packets (220) - to the IPv6 destination address portion.

According to a preferred embodiment according to the present invention, the 128 bits (of an IPv6 address used in the header information (as source or destination address portion) of an uplink or downlink data packet 210, 220) can be divided into three different parts or fields, (a), (b), and (c):

(a) - first part or field - Bits 0 to X correspond to the prefix bits that do, typically, not change over time. These bits (up to bit X) are especially defined (in a manner conventionally known) by the prefix allocated, typically by the IP registry, to a mobile network or satellite network operator. Typical values for the number of prefix bits (i.e. X + 1) are 32, 28, or 24 bits. The operator might decide to increase this number of prefix bits, especially in case that its wants to reserve some of its available (i.e. assigned) IPv6 addresses. In the following, such predefined number of bits (of the prefix) are considered to exist as part of a relevant IPv6 address but such bits are not particularly relevant with regard to the present invention. Hence, even in case that the number of prefix bits are increased, as mentioned above, such an increased number of bits is considered the (unchanged) prefix. This behavior of first bits in an IPv6 address (or, to use the first bits of the IPv6 address as prefix) is conventionally known.

(b) - second part or field - Bits X+1 to Y: these bits are used to identify the user equipment 20, i.e. represent the user equipment identifier information (hereinafter, this part or field of the IPv6 address used in the header information as source or destination address portion is also called UE ID); the mobile- and satellite-network operator, e.g., maps the international mobile subscriber identity, IMSI, of the user equipment 20 (e.g. stored in the subscriber identity module (card), SIM (card), or universal integrated circuit card) - or another user equipment-specific identifier - to an identifier that corresponds to the number of bits of the second part or field (i.e. Y - X - 1 bits in length); an example for Y is, e.g., 64, but Y could also be lower or higher.

(c) - second part or field - Bits Y+1 to 127: these bits are used to identify the satellite - i.e. the access node entity or functionality 111 - that the user equipment 20 has received the IPv6 address (i.e. the considered data packet) from (hereinafter, this part or field of the IPv6 address used in the header information as source or destination address portion is also called Sat ID).

Hence, the IPv6 addresses, assigned to the user equipment 20, and used according to the present invention (between at least the core network node entity or functionality 121, and also the external IP endpoint 122 and/or the internal IP endpoint 123, on the one hand, and, on the other hand, the access node entities or functionalities or base station entities 111, 112, 113 as well as the user equipment 20) can be described as:

| Prefix | UE ID | Sat ID | i.e. the user equipment identifier information preceding (as part of the IPv6 destination address) the access node identifier information.

(Uplink) IPv6 data packets 410 are sent from the user equipment 20 to an IP address such as, e.g., the core network node entity or functionality 121 and/or the external IP endpoint 122 and/or the internal IP endpoint 123; i.e. such IPv6 data packets are usually sent to an endpoint, e.g. of a server, for example on the internet, an endpoint of a server inside an operator (i.e. inside the mobile communication network 100), or any other endpoint inside or outside the mobile- and satellite-operator. The user equipment 20 uses the IPv6 address of the IP endpoint 121, 122, 123 as the IPv6 destination address (i.e. as the IPv6 destination address portion of the IPv6 header information). Furthermore, the user equipment 20 uses the IPv6 address described above (Prefix + UE ID + Sat ID) as the IPv6 source address (i.e. as the IPv6 source address portion of the IPv6 header information).

Satellites (or access node entities or functionalities or base station entities 111, 112, 113) are able to forward these IPv6 data packets to other satellites (or base station entities) using conventionally known IPv6 forwarding procedures and protocols, until they reach the earth ground station or core network node entity or functionality 121, and from there to the final destination. This forwarding is able to be realized according to conventionally known methods and procedures.

However, IPv6 data packets returning from an IP endpoint to the user equipment 20, i.e. downlink data packets 220, will hit the earth ground station, or core network node entity or functionality 121 (of course having the IPv6 address described above (Prefix + UE ID + Sat ID) as the IPv6 destination address, i.e. as the IPv6 destination address portion of the IPv6 header information having been assigned to the user equipment 20). Hence, according to a preferred embodiment of the present invention, in a downlink data packet 220 that is received - in view of being forwarded to the user equipment 20 via the access node entity or functionality 111 - by a reception network node 121 of the mobile communication network 100 - especially by the at least one core network node entity or functionality 121 or by the (or an) earth ground station -, both the user equipment identifier information and the access node identifier information is used as part of the IPv6 destination address portion, wherein especially the user equipment identifier information precedes (as part of the IPv6 destination address) the access node identifier information.

Especially according to such a preferred embodiment of the present invention, in a downlink data packet 220 being transmitted by that reception network node 121 - especially by the at least one core network node entity or functionality 121 or by the (or an) earth ground station - and in view of being forwarded to the user equipment 20 via the access node entity or functionality 111 and after having been received by the reception network node, likewise both the user equipment identifier information and the access node identifier information is used as part of the IPv6 destination address portion, but preferably in reversed order, i.e. especially the access node identifier information precedes (as part of the IPv6 destination address portion) the user equipment identifier information.

Hence, according to a preferred embodiment of the present invention, the earth ground station performs a swap in the sequence of bits of this IPv6 destination address, namely swapping the UE ID and the Sat ID, before forwarding the (downlink) data packet 220 to the respective satellite 111 (or access node entity or functionality or base station entity). Hence, the IPv6 format when hitting the earth ground station 121 is as follows:

$$\text{IPv6 destination address = Prefix + UE ID + Sat ID,}$$

IPv6 source address = IPv6 address of the IP endpoint sending the IPv6 packet The IPv6 format after hitting the earth ground station 121 is as follows:

$$\text{IPv6 destination address = Prefix + Sat ID + UE ID}$$

IPv6 source address = IPv6 address of the IP endpoint sending the IPv6 packet.

After this swap, the earth ground station 121 is able to use normal routing procedures to send the considered IPv6 packet to the respective satellite 111, 112, 113 the user equipment 20 is connected to. The Sat ID is used by the routing protocol to deliver the considered IPv6 data packet to the satellite 111, 112, 113 the user equipment 20 is (or has been) connected to. The forwarding of such IPv6 data packets inside the satellite network is, again, realized according to conventionally known methods.

The satellite 111, 112, 113, on receipt of the considered (downlink) IPv6 data packet 220 (i.e. a data packet to be sent to the user equipment 20) is able to verify if the user equipment 20 is still connected to it. If the user equipment 20 is not connected, the user equipment 20 can be either unknown; in this case the IPv6 data packet is discarded; alternatively, it might also be the case that the user equipment 20 has moved to another satellite 111, 112, 113; in this case, the mobility mechanism explained below is used. In case, however, that the user equipment 20 is still connected to the considered satellite 111, 112, 113, the satellite likewise swaps the sequence of bits of the IPv6 (destination) address before forwarding the (downlink) data packet 220 to the user equipment 20 (i.e. the satellite swaps the sequence of bits of the IPv6 (destination) address a second time), thereby restoring the IPv6 destination address to the format according to which it has originally been sent (i.e. to the format according to which the data packet has been arrived at the earth ground station 121).

Hence, according to a preferred embodiment of the present invention, in a downlink data packet 220 that is transmitted by the access node entity or functionality 111 (especially a satellite 111) - in view of being forwarded to the user equipment 20, especially a user equipment 20 that is still connected to the respective access node entity or functionality 111 and after the downlink data packet 220 having been received by the access node entity or functionality 111 - likewise both the user equipment identifier information and the access node identifier information is used as part of the IPv6 destination address portion, and especially the user equipment identifier information precedes (again) the access node identifier information as part of the IPv6 destination address portion.

Thus, the IPv6 format of the downlink data packet 220 (sent from (or by) the earth ground station 121) when hitting the satellite 111, 112, 113 is as follows:

$$\text{IPv6 destination address = Prefix + Sat ID + UE ID}$$

IPv6 source address = IPv6 address of the IP endpoint sending the IPv6 packet

The IPv6 format of the downlink data packet 220 (being sent to the user equipment 20) when leaving the satellite 111, 112, 113:

$$\text{IPv6 destination address = Prefix + UE ID + Sat ID}$$

IPv6 source address = IPv6 address of the IP endpoint sending the IPv6 packet.

Hence, the user equipment 20 receives the IPv6 (downlink) data packet 220 from the satellite 111, 112, 113 in the same format as it has been sent from the sending endpoint 122, 123, namely, the IPv6 destination address corresponding to "Prefix + UE ID + Sat ID" and the IPv6 source address corresponding to the IPv6 address of the IP endpoint sending the IPv6 packet.

According to the present invention, by means of the inventive use, as part of the used IPv6 addressing elements of the header information, of the identity information of the respective satellites 111, 112, 113 (in the exemplary scenarios shown in the Figures) - but, more generally, the use of the identity information, or, rather, the access node identifier information of the respective access node entities or functionalities 111, 112, 113 (with which a user equipment 20 needs to communicate) - it is advantageously possible, according to the present invention, to handle mobility requirements (of user equipments 20 relative to access node entities or functionalities 111, 112, 113) and implement mobility functionality in a much more effective manner than conventionally known: As has been described above, the user equipments 20 connected to a satellite-based (non-terrestrial) network are expected to require much more (frequent) handovers from one base station (or satellite) to another (especially when compared to the typical scenario of using a terrestrial radio access network with some rather stationary user equipments and some mobile user equipments); hence when non-terrestrial (access) networks are involved, there is a greater need for an efficient implementation of mobility functionality. However, also when merely using terrestrial radio access networks, mobility functionality is required to be implemented, even though, in this case, the mobility requirements mainly stem from the mobility of the user equipments 20 relative to the typically stationary base station entities (i.e. access node entities or functionalities).

Handover procedures of a user equipment 20 between different satellites 111, 112, 113 are basically performed in an analogous manner to handover procedures of a user equipment 20 between different (stationary) base station entities: Hence, when a user equipment 20 decides that it should connect to a new satellite 111, 112, 113 - either as the first one it connects to, or as a subsequent one where it decides to make a handover to - the user equipment 20 signals its intention to the existing (or, source) satellite (or base station entity) - i.e. (source) access node entity or functionality

- it is connected to; thereafter, the target satellite (or (target) base station entity or (target) access node entity or functionality) is informed about this intention of the user equipment 20. A satellite identification is usually done by measuring the quality of the signals being received by the user equipment 20. Once the current satellite receives a handover request, it contacts the target satellite, and informs about the coming handover. The target satellite confirms by means of accepting the handover and the current satellite informs the user equipment 20 about the readiness of the handover. Hence, the sequence of a handover typically is as follows:

-- in a first processing step, the user equipment 20 measures the quality of the signals being received from multiple satellites;
-- in a second processing step, the user equipment 20 informs the current (or source) satellite it is connected to about the measurements and the intention to handover to a new (target) satellite;
-- in a third processing step, the current satellite requests the new satellite about a handover from a specific user equipment 20;
-- in a fourth processing step, the new satellite confirms the readiness for a handover;
-- in a fifth processing step, the current satellite informs the user equipment 20 it can start to use the new satellite.

Such handover procedure does not significantly change whether a terrestrial base station entity (or access node entity or functionality) is used or whether a non-terrestrial network base station entity (or non-terrestrial network access node entity or functionality) is used, and this handover procedure is used within 5G networks in a conventionally known manner.

According to the present invention, an IPv6-based handover procedure is able to be used, i.e. an IPv6-based scenario that advantageously makes use of IPv6-specific features or solutions - especially the above mentioned twofold swapping of the user equipment identifier information and the access node identifier information in an IPv6 destination address portion of a downlink data packet 220 - that are possible when using IPv6 data packets. This means that, according to the present invention, also a modified handover procedure is proposed that significantly differs from the conventionally known handover procedure, especially by means of performing, or adding, IPv6-related functions such as the above-mentioned swapping. Hence, according to the present invention, it is especially preferred that in case of a handover procedure of the user equipment 20 from the access node entity or functionality 111 to a further access node entity or functionality 112,

-- the further access node entity or functionality 112 creates, especially prior to sending a handover confirmation to the access node entity or functionality 111 - according to the fourth processing step -, an IPv6 route pointing to the user equipment 20, and
-- the access node entity or functionality 111 creates, especially prior to sending a handover confirmation to the user equipment 20 - according to the fifth processing step - , an internal IPv6 route that results in forwarding all IPv6 data packets to the further access node entity or functionality 112 that are pointing to the user equipment 20 as their destination.

Hence, it is preferred that before sending the confirmation of the handover (fourth processing step), the new satellite 112 creates an internal IPv6 route pointing to the user equipment 20. With this route, all IPv6 packets that the new satellite 112 receives with a destination to the user equipment 20 will be routed to the user equipment 20. Furthermore, before sending the confirmation for the new satellite 112 (fifth processing step), the current satellite 111 creates an internal route that will forward all IPv6 packets that have the destination set to the user equipment 20 to the new satellite 112.

According to the present invention, it is furthermore especially preferred that in case of a handover procedure of the user equipment 20 from the access node entity or functionality 111 to the further access node entity or functionality

112, the user equipment 20 uses, in IPv6 address portions of data packets (especially in uplink data packets), the user equipment identifier information and the access node identifier information of either the access node entity or functionality 111 (presently (or previously) serving the user equipment 20) or of the further access node entity or functionality 112 (subsequently (or presently) serving the user equipment 20), respectively, if connected to the access node entity or functionality 111 or to the further access node entity or functionality 112; especially, the user equipment 20 uses, in IPv6 source address portions of uplink data packets, the user equipment identifier information and the access node identifier information of either the access node entity or functionality 111 or of the further access node entity or functionality 112, respectively, if connected to the access node entity or functionality 111 or to the further access node entity or functionality 112.

Hence, when connecting to a new satellite 112 (after the fifth processing step), the user equipment 20 will use a new IPv6 address as the new satellite 112 will have a different satellite ID as the current one. The IPv6 will have the same Prefix and UE ID.

It is furthermore preferred that - if this new IPv6 address is self-allocated by the user equipment 20 - it will be only used once the current satellite 111 informs the user equipment 20 that it can start to use the new satellite 112 (i.e. the information provided to the user equipment 20 in the fifth processing step of the above mentioned handover procedure), or it will be provided by the current satellite 111 using an existing IPv6 address allocation method as part of the fifth processing step.

At the end of (or after) the handover procedure, the user equipment 20 preferably has an IPv6 (address) from (or linked or related to) the old satellite 111, i.e. Prefix + UE ID + Sat ID of old satellite 111 (corresponding to an old user equipment IPv6 address).

The user equipment 20 furthermore preferably has an IPv6 (address) from (or linked or related to) the new satellite 112, i.e. Prefix + UE ID + Sat ID of new satellite 112 (corresponding to a new user equipment IPv6 address).

The default IPv6 address will preferably be the IPv6 address using the new satellite 112, and this IPv6 address will be, preferably, used for all subsequent data packets that the user equipment 20 sends.

Preferably, the IPv6 address of the old satellite 111 will expire once a timeout is reached and will be removed.

The old satellite 111 preferably has a route forwarding all IPv6 packets addressed to the old user equipment IPv6 address (P + UE ID + Sat ID of old satellite 111) to the new user equipment IPv6 address involving (or relating to) the new satellite 112 (Prefix + UE ID + Sat ID of new satellite 112). This forwarding route will preferably expire on a timeout or timeout basis, and will be removed.

The new satellite 112 preferably has an internal route forwarding all IPv6 packets to the user equipment 20.

**Claims**

1. Method for using a user equipment (20) in a mobile communication network (100) and for providing communication services to the user equipment (20), wherein the mobile communication network (100) comprises, or is associated to, an radio access network (110) and a core network (120), wherein the radio access network (110) comprises at least one access node entity or functionality (111) and wherein the core network (120) comprises at least one core network node entity or functionality (121), the access node entity or functionality (111) having, or using, an access node identifier information, wherein the user equipment (20) has, or uses, a user equipment identifier information,

   wherein the user equipment (20) transmits uplink data packets (210) that are at least intended to be transmitted towards the access node entity or functionality (111) and the access node entity or functionality (111) receives such uplink data packets (210), wherein furthermore the access node entity or functionality (111) transmits downlink data packets (220) that are at least intended to be transmitted towards the user equipment (20) and the user equipment (20) receives such downlink data packets (220),
   wherein both the uplink data packets (210) and the downlink data packets (220) comprise an IPv6 header information comprising an IPv6 source address portion and an IPv6 destination address portion, wherein, in view of using the user equipment (20) and in view of providing communication services to the user equipment (20), the method comprises the following steps:

   -- in a first step, in uplink data packets (210) that are transmitted by the user equipment (20), the used IPv6 source address portion comprises the user equipment identifier information and the access node identifier information,
   -- in a second step, in downlink data packets (220) that are received by the user equipment (20), the used IPv6 destination address portion comprises the user equipment identifier information and the access node identifier information.

2. Method according to claim 1, wherein the IPv6 header information of both the uplink data packets (210) and the downlink data packets (220) correspond to 40 byte IPv6 header information, and wherein especially not extension headers need to be used to indicate the IPv6 source and/or destination address portions, and/or

wherein the radio access network (110) corresponds to

-- a terrestrial access network, or
-- a non-terrestrial access network, or
-- in part a terrestrial access network and in another part a non-terrestrial access network,

wherein the at least one access node entity or functionality (111), but preferably a plurality of access node entities or functionalities, corresponds to

-- a base station entity being part of a non-terrestrial network, especially a base station entity aboard a satellite or aboard a high-altitude platform, or
-- an antenna entity or functionality being part of a non-terrestrial network, especially an antenna entity or functionality aboard a satellite or aboard a high-altitude platform, the antenna entity or functionality especially being associated or assigned to a terrestrial base station entity, or
-- a base station entity being part of a terrestrial network.

3. Method according to one of the preceding claims, wherein in a downlink data packet (220) that is received - in view of being forwarded to the user equipment (20) via the access node entity or functionality (111) - by a reception network node of the mobile communication network (100), especially the at least one core network node entity or functionality (121), both the user equipment identifier information and the access node identifier information is used as part of the IPv6 destination address portion,
wherein especially the user equipment identifier information precedes the access node identifier information as part of the IPv6 destination address portion.

4. Method according to one of the preceding claims, wherein in a downlink data packet (220) that is transmitted by the reception network node, especially the at least one core network node entity or functionality (121), - in view of being forwarded to the user equipment (20) via the access node entity or functionality (111) and after having been received by the reception network node - likewise both the user equipment identifier information and the access node identifier information is used as part of the IPv6 destination address portion,
wherein especially the access node identifier information precedes the user equipment identifier information as part of the IPv6 destination address portion.

5. Method according to one of the preceding claims, wherein in a downlink data packet (220) that is transmitted by the access node entity or functionality (111) - in view of being forwarded to the user equipment (20), especially a user equipment (20) that is still connected to the respective access node entity or functionality (111) and after the downlink data packet (220) having been received by the access node entity or functionality (111) - likewise both the user equipment identifier information and the access node identifier information is used as part of the IPv6 destination address portion,
wherein especially the user equipment identifier information precedes the access node identifier information as part of the IPv6 destination address portion.

6. Method according to one of the preceding claims, wherein in case of a handover procedure of the user equipment (20) from the access node entity or functionality (111) to a further access node entity or functionality (112),

-- the further access node entity or functionality (112) creates, especially prior to sending a handover confirmation to the access node entity or functionality (111), an IPv6 route pointing to the user equipment (20), and
-- the access node entity or functionality (111) creates, especially prior to sending a handover confirmation to the user equipment (20), an internal IPv6 route that results in forwarding all IPv6 data packets to the further access node entity or functionality (112) that are pointing to the user equipment (20) as their destination.

7. Method according to one of the preceding claims, wherein in case of the handover procedure of the user equipment (20) from the access node entity or functionality (111) to the further access node entity or functionality (112), the user equipment (20) uses, in IPv6 address portions of data packets, the user equipment identifier information and the access node identifier information of either the access node entity or functionality (111) or of the further access node entity or functionality (112), respectively, if connected to the access node entity or functionality (111) or to the further access node entity or functionality (112),
wherein especially, the user equipment (20) uses, in IPv6 source address portions of uplink data packets, the user equipment identifier information and the access node identifier information of either the access node entity or functionality (111) or of the further access node entity or functionality (112), respectively, if connected to the access node entity or functionality (111) or to the further access node entity or functionality (112).

8. System or mobile communication network (100) for using a user equipment (20) in a mobile communication network (100) and for providing communication services to the user equipment (20), wherein the mobile communication network (100) comprises, or is associated to, an radio access network (110) and a core network (120), wherein the radio access network (110) comprises at least one access node entity or functionality (111) and wherein the core network (120) comprises at least one core network node entity or functionality (121), the access node entity or functionality (111) having, or using, an access node identifier information,

wherein the user equipment (20) has, or uses, a user equipment identifier information,
wherein the user equipment (20) transmits uplink data packets (210) that are at least intended to be transmitted towards the access node entity or functionality (111) and the access node entity or functionality (111) receives such uplink data packets (210), wherein furthermore the access node entity or functionality (111) transmits downlink data packets (220) that are at least intended to be transmitted towards the user equipment (20) and the user equipment (20) receives such downlink data packets (220),
wherein both the uplink data packets (210) and the downlink data packets (220) comprise an IPv6 header information comprising an IPv6 source address portion and an IPv6 destination address portion, wherein, in view of using the user equipment (20) and in view of providing communication services to the user equipment (20), the system or the mobile communication network (100) in configured such that:

-- in uplink data packets (210) that are transmitted by the user equipment (20), the used IPv6 source address portion comprises the user equipment identifier information and the access node identifier information,
-- in downlink data packets (220) that are received by the user equipment (20), the used IPv6 destination address portion comprises the user equipment identifier information and the access node identifier information.

9. User equipment (20), especially as part of a system or connected to a mobile communication network (100) according to claim 8, for using a user equipment (20) in the mobile communication network (100) and for providing communication services to the user equipment (20), wherein the mobile communication network (100) comprises, or is associated to, an radio access network (110) and a core network (120), wherein the radio access network (110) comprises at least one access node entity or functionality (111) and wherein the core network (120) comprises at least one core network node entity or functionality (121), the access node entity or functionality (111) having, or using, an access node identifier information,

wherein the user equipment (20) has, or uses, a user equipment identifier information,
wherein the user equipment (20) transmits uplink data packets (210) that are at least intended to be transmitted towards the access node entity or functionality (111) and the access node entity or functionality (111) receives such uplink data packets (210), wherein furthermore the access node entity or functionality (111) transmits downlink data packets (220) that are at least intended to be transmitted towards the user equipment (20) and the user equipment (20) receives such downlink data packets (220),
wherein both the uplink data packets (210) and the downlink data packets (220) comprise an IPv6 header information comprising an IPv6 source address portion and an IPv6 destination address portion, wherein, in view of using the user equipment (20) and in view of providing communication services to the user equipment (20), the user equipment (20) is configured such that:

-- in uplink data packets (210) that are transmitted by the user equipment (20), the used IPv6 source address portion comprises the user equipment identifier information and the access node identifier information,
-- in downlink data packets (220) that are received by the user equipment (20), the used IPv6 destination address portion comprises the user equipment identifier information and the access node identifier information.

10. Access node entity or functionality (111) or core network node entity or functionality (121), especially as part of a system or connected to a mobile communication network (100) according to claim 8, for using a user equipment (20) in the mobile communication network (100) and for providing communication services to the user equipment (20), wherein the mobile communication network (100) comprises, or is associated to, an radio access network (110) and a core network (120), wherein the radio access network (110) comprises the access node entity or functionality (111) and wherein the core network (120) comprises the core network node entity or functionality (121), the access node entity or functionality (111) having, or using, an access node identifier information,

wherein the user equipment (20) has, or uses, a user equipment identifier information,
wherein the user equipment (20) transmits uplink data packets (210) that are at least intended to be transmitted towards the access node entity or functionality (111) and the access node entity or functionality (111) receives such uplink data packets (210), wherein furthermore the access node entity or functionality (111) transmits downlink data packets (220) that are at least intended to be transmitted towards the user equipment (20) and the user equipment (20) receives such downlink data packets (220),
wherein both the uplink data packets (210) and the downlink data packets (220) comprise an IPv6 header information comprising an IPv6 source address portion and an IPv6 destination address portion, wherein, in view of using the user equipment (20) and in view of providing communication services to the user equipment (20), the access node entity or functionality (111) or the core network node entity or functionality (121) is/are configured such that:

-- in uplink data packets (210) that are transmitted by the user equipment (20), the used IPv6 source address portion comprises the user equipment identifier information and the access node identifier information,
-- in downlink data packets (220) that are received by the user equipment (20), the used IPv6 destination address portion comprises the user equipment identifier information and the access node identifier information.

**11.** Program comprising a computer readable program code, which, when executed on a computer and/or on a user equipment (20) and/or on a network node of a mobile communication network (100) and/or on an access node entity or functionality (111) and/or on a core network node entity or functionality (121), or in part on a user equipment (20) and/or in part on a network node of a mobile communication network (100) and/or in part on an access node entity or functionality (111) and/or in part on a core network node entity or functionality (121), causes the computer and/or the user equipment (20) and/or the network node of the mobile communication network (100) and/or the access node entity or functionality (111) and/or the core network node entity or functionality (121), to perform a method according one of claims 1 to 7.

**12.** Computer-readable medium comprising instructions which when executed on a computer and/or on a user equipment (20) and/or on a network node of a mobile communication network (100) and/or on an access node entity or functionality (111) and/or on a core network node entity or functionality (121), or in part on a user equipment (20) and/or in part on a network node of a mobile communication network (100) and/or in part on an access node entity or functionality (111) and/or in part on a core network node entity or functionality (121), causes the computer and/or the user equipment (20) and/or the network node of the mobile communication network (100) and/or the access node entity or functionality (111) and/or the core network node entity or functionality (121), to perform a method according one of claims 1 to 7

**Amended claims in accordance with Rule 137(2) EPC.**

**1.** Method for using a user equipment (20) in a mobile communication network (100) and for providing communication services to the user equipment (20), wherein the mobile communication network (100) comprises, or is associated to, an radio access network (110) and a core network (120), wherein the radio access network (110) corresponds to

-- a non-terrestrial access network, or
-- in part a terrestrial access network and in another part a non-terrestrial access network,
wherein the radio access network (110) comprises at least one access node entity or functionality (111) and wherein the core network (120) comprises at least one core network node entity or functionality (121), wherein the access node entity or functionality (111) corresponds to a base station entity that is part of a non-terrestrial network, or to an antenna entity or functionality that is part of a non-terrestrial network, the access node entity or functionality (111) having, or using, an access node identifier information, wherein the access node identifier information is specifically assigned to the access node entity or functionality (111) and is used to identify the access node entity or functionality (111),

wherein the user equipment (20) has, or uses, a user equipment identifier information, wherein the user equipment identifier information is specifically assigned to the user equipment (20) and is used to identify the user equipment (20),

wherein the user equipment (20) transmits uplink data packets (210) that are at least intended to be transmitted towards the access node entity or functionality (111) and the access node entity or functionality (111) receives such uplink data packets (210), wherein furthermore the access node entity or functionality (111) transmits downlink data packets (220) that are at least intended to be transmitted towards the user equipment (20) and the user equipment (20) receives such downlink data packets (220),

wherein both the uplink data packets (210) and the downlink data packets (220) comprise an IPv6 header information comprising an IPv6 source address and an IPv6 destination address,

wherein, in view of using the user equipment (20) and in view of providing communication services to the user equipment (20), the method comprises the following steps:

-- in a first step, in uplink data packets (210) that are transmitted by the user equipment (20), the used IPv6 source address comprises the user equipment identifier information and the access node identifier information,

-- in a second step, in downlink data packets (220) that are received by the user equipment (20), the used IPv6 destination address comprises the user equipment identifier information and the access node identifier information.

2. Method according to claim 1, wherein the IPv6 header information of both the uplink data packets (210) and the downlink data packets (220) correspond to 40 byte IPv6 header information, and wherein especially not extension headers need to be used to indicate the IPv6 source and/or destination addresses.

3. Method according to one of the preceding claims, wherein the at least one access node entity or functionality (111), but preferably a plurality of access node entities or functionalities, corresponds to

-- a base station entity aboard a satellite or aboard a high-altitude platform, or

-- an antenna entity or functionality aboard a satellite or aboard a high-altitude platform, the antenna entity or functionality especially being associated or assigned to a terrestrial base station entity.

4. Method according to one of the preceding claims, wherein in a downlink data packet (220) that is received - in view of being forwarded to the user equipment (20) via the access node entity or functionality (111) - by a reception network node of the mobile communication network (100), especially the at least one core network node entity or functionality (121), both the user equipment identifier information and the access node identifier information is used as part of the IPv6 destination address,

wherein especially the user equipment identifier information precedes the access node identifier information as part of the IPv6 destination address.

5. Method according to one of the preceding claims, wherein in a downlink data packet (220) that is transmitted by the reception network node, especially the at least one core network node entity or functionality (121), - in view of being forwarded to the user equipment (20) via the access node entity or functionality (111) and after having been received by the reception network node - likewise both the user equipment identifier information and the access node identifier information is used as part of the IPv6 destination address, wherein especially the access node identifier information precedes the user equipment identifier information as part of the IPv6 destination address.

6. Method according to one of the preceding claims, wherein in a downlink data packet (220) that is transmitted by the access node entity or functionality (111)

- in view of being forwarded to the user equipment (20), especially a user equipment (20) that is still connected to the respective access node entity or functionality (111) and after the downlink data packet (220) having been received by the access node entity or functionality (111) - likewise both the user equipment identifier information and the access node identifier information is used as part of the IPv6 destination address, wherein especially the user equipment identifier information precedes the access node identifier information as part of the IPv6 destination address.

7. Method according to one of the preceding claims, wherein in case of a handover procedure of the user equipment (20) from the access node entity or functionality (111) to a further access node entity or functionality (112),

-- the further access node entity or functionality (112) creates, especially prior to sending a handover confirmation to the access node entity or functionality (111), an IPv6 route pointing to the user equipment (20), and
-- the access node entity or functionality (111) creates, especially prior to sending a handover confirmation to the user equipment (20), an internal IPv6 route that results in forwarding all IPv6 data packets to the further access node entity or functionality (112) that are pointing to the user equipment (20) as their destination.

**8.** Method according to one of the preceding claims, wherein in case of the handover procedure of the user equipment (20) from the access node entity or functionality (111) to the further access node entity or functionality (112), the user equipment (20) uses, in IPv6 addresses of data packets, the user equipment identifier information and the access node identifier information of either the access node entity or functionality (111) or of the further access node entity or functionality (112), respectively, if connected to the access node entity or functionality (111) or to the further access node entity or functionality (112),
wherein especially, the user equipment (20) uses, in IPv6 source addresses of uplink data packets, the user equipment identifier information and the access node identifier information of either the access node entity or functionality (111) or of the further access node entity or functionality (112), respectively, if connected to the access node entity or functionality (111) or to the further access node entity or functionality (112).

**9.** System or mobile communication network (100) for using a user equipment (20) in a mobile communication network (100) and for providing communication services to the user equipment (20), wherein the mobile communication network (100) comprises, or is associated to, an radio access network (110) and a core network (120), wherein the radio access network (110) corresponds to

-- a non-terrestrial access network, or
-- in part a terrestrial access network and in another part a non-terrestrial access network,
wherein the radio access network (110) comprises at least one access node entity or functionality (111) and wherein the core network (120) comprises at least one core network node entity or functionality (121), wherein the access node entity or functionality (111) corresponds to a base station entity that is part of a non-terrestrial network, or to an antenna entity or functionality that is part of a non-terrestrial network, the access node entity or functionality (111) having, or using, an access node identifier information, wherein the access node identifier information is specifically assigned to the access node entity or functionality (111) and is used to identify the access node entity or functionality (111),
wherein the user equipment (20) has, or uses, a user equipment identifier information, wherein the user equipment identifier information is specifically assigned to the user equipment (20) and is used to identify the user equipment (20),
wherein the user equipment (20) transmits uplink data packets (210) that are at least intended to be transmitted towards the access node entity or functionality (111) and the access node entity or functionality (111) receives such uplink data packets (210), wherein furthermore the access node entity or functionality (111) transmits downlink data packets (220) that are at least intended to be transmitted towards the user equipment (20) and the user equipment (20) receives such downlink data packets (220),
wherein both the uplink data packets (210) and the downlink data packets (220) comprise an IPv6 header information comprising an IPv6 source address and an IPv6 destination address,
wherein, in view of using the user equipment (20) and in view of providing communication services to the user equipment (20), the system or the mobile communication network (100) in configured such that:

-- in uplink data packets (210) that are transmitted by the user equipment (20), the used IPv6 source address comprises the user equipment identifier information and the access node identifier information,
-- in downlink data packets (220) that are received by the user equipment (20), the used IPv6 destination address comprises the user equipment identifier information and the access node identifier information.

**10.** User equipment (20), especially as part of a system or connected to a mobile communication network (100) according to claim 9, for using a user equipment (20) in the mobile communication network (100) and for providing communication services to the user equipment (20), wherein the mobile communication network (100) comprises, or is associated to, an radio access network (110) and a core network (120), wherein the radio access network (110) corresponds to

-- a non-terrestrial access network, or
-- in part a terrestrial access network and in another part a non-terrestrial access network,
wherein the radio access network (110) comprises at least one access node entity or functionality (111) and wherein the core network (120) comprises at least one core network node entity or functionality (121), wherein the access node entity or functionality (111) corresponds to a base station entity that is part of a non-terrestrial network, or to an antenna entity or functionality that is part of a non-terrestrial network, the access node entity or functionality (111) having, or using, an access node identifier information, wherein the access node identifier information is specifically assigned to the access node entity or functionality (111) and is used to identify the access node entity or functionality (111),

wherein the user equipment (20) has, or uses, a user equipment identifier information, wherein the user equipment identifier information is specifically assigned to the user equipment (20) and is used to identify the user equipment (20),

wherein the user equipment (20) transmits uplink data packets (210) that are at least intended to be transmitted towards the access node entity or functionality (111) and the access node entity or functionality (111) receives such uplink data packets (210), wherein furthermore the access node entity or functionality (111) transmits downlink data packets (220) that are at least intended to be transmitted towards the user equipment (20) and the user equipment (20) receives such downlink data packets (220),

wherein both the uplink data packets (210) and the downlink data packets (220) comprise an IPv6 header information comprising an IPv6 source address and an IPv6 destination address,

wherein, in view of using the user equipment (20) and in view of providing communication services to the user equipment (20), the user equipment (20) is configured such that:

-- in uplink data packets (210) that are transmitted by the user equipment (20), the used IPv6 source address comprises the user equipment identifier information and the access node identifier information,
-- in downlink data packets (220) that are received by the user equipment (20), the used IPv6 destination address comprises the user equipment identifier information and the access node identifier information.

11. Access node entity or functionality (111) or core network node entity or functionality (121), especially as part of a system or connected to a mobile communication network (100) according to claim 9, for using a user equipment (20) in the mobile communication network (100) and for providing communication services to the user equipment (20), wherein the mobile communication network (100) comprises, or is associated to, an radio access network (110) and a core network (120), wherein the radio access network (110) corresponds to

-- a non-terrestrial access network, or
-- in part a terrestrial access network and in another part a non-terrestrial access network,

wherein the radio access network (110) comprises the access node entity or functionality (111) and wherein the core network (120) comprises the core network node entity or functionality (121), wherein the access node entity or functionality (111) corresponds to a base station entity that is part of a non-terrestrial network, or to an antenna entity or functionality that is part of a non-terrestrial network, the access node entity or functionality (111) having, or using, an access node identifier information, wherein the access node identifier information is specifically assigned to the access node entity or functionality (111) and is used to identify the access node entity or functionality (111),

wherein the user equipment (20) has, or uses, a user equipment identifier information, wherein the user equipment identifier information is specifically assigned to the user equipment (20) and is used to identify the user equipment (20),

wherein the user equipment (20) transmits uplink data packets (210) that are at least intended to be transmitted towards the access node entity or functionality (111) and the access node entity or functionality (111) receives such uplink data packets (210), wherein furthermore the access node entity or functionality (111) transmits downlink data packets (220) that are at least intended to be transmitted towards the user equipment (20) and the user equipment (20) receives such downlink data packets (220),

wherein both the uplink data packets (210) and the downlink data packets (220) comprise an IPv6 header information comprising an IPv6 source address and an IPv6 destination address,

wherein, in view of using the user equipment (20) and in view of providing communication services to the user equipment (20), the access node entity or functionality (111) or the core network node entity or functionality (121) is/are configured such that:

-- in uplink data packets (210) that are received by the access node entity or functionality (111) or the core network node entity or functionality (121) from the user equipment (20), the used IPv6 source address comprises the user equipment identifier information and the access node identifier information,
-- in downlink data packets (220) that are transmitted by the access node entity or functionality (111) or the core network node entity or functionality (121) to the user equipment (20), the used IPv6 destination address comprises the user equipment identifier information and the access node identifier information.

**12.** Program comprising a computer readable program code, which, when executed on a computer and/or on a user equipment (20) and/or on a network node of a mobile communication network (100) and/or on an access node entity or functionality (111) and/or on a core network node entity or functionality (121), or in part on a user equipment (20) and/or in part on a network node of a mobile communication network (100) and/or in part on an access node entity or functionality (111) and/or in part on a core network node entity or functionality (121), causes the computer and/or the user equipment (20) and/or the network node of the mobile communication network (100) and/or the access node entity or functionality (111) and/or the core network node entity or functionality (121), to perform a method according one of claims 1 to 8.

**13.** Computer-readable medium comprising instructions which when executed on a computer and/or on a user equipment (20) and/or on a network node of a mobile communication network (100) and/or on an access node entity or functionality (111) and/or on a core network node entity or functionality (121), or in part on a user equipment (20) and/or in part on a network node of a mobile communication network (100) and/or in part on an access node entity or functionality (111) and/or in part on a core network node entity or functionality (121), causes the computer and/or the user equipment (20) and/or the network node of the mobile communication network (100) and/or the access node entity or functionality (111) and/or the core network node entity or functionality (121), to perform a method according one of claims 1 to 8.

Fig. 1

Fig. 2

Fig. 3

Europäisches
Patentamt

European
Patent Office

Office européen
des brevets

# EUROPEAN SEARCH REPORT

Application Number

EP 23 16 1902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PONGPAIBOOL P ET AL: "Rapid IPv6 address autoconfiguration for heterogeneous mobile technologies", ITS TELECOMMUNICATIONS, 2008. ITST 2008. 8TH INTERNATIONAL CONFERENCE ON, IEEE, PISCATAWAY, NJ, USA, 24 October 2008 (2008-10-24), pages 234-239, XP031402752, ISBN: 978-1-4244-2857-1 * paragraphs [004A], [004B] * | 1-12 | INV. H04L61/5084 |
| X | GIUST FABIO ET AL: "Simplification as design principle for 5G: A native IP data plane for a lean packet system", 2017 IEEE 28TH ANNUAL INTERNATIONAL SYMPOSIUM ON PERSONAL, INDOOR, AND MOBILE RADIO COMMUNICATIONS (PIMRC), IEEE, 8 October 2017 (2017-10-08), pages 1-7, XP033321504, DOI: 10.1109/PIMRC.2017.8292609 ISBN: 978-1-5386-3529-2 [retrieved on 2018-02-14] * paragraphs [0003], [0004] * | 1-12 | |
| X | EP 2 782 372 A1 (ZTE CORP [CN]) 24 September 2014 (2014-09-24) * paragraphs [0010], [0014], [0024] * | 1-12 | TECHNICAL FIELDS SEARCHED (IPC) H04L H04W |
| X | EP 1 681 895 B1 (SAMSUNG ELECTRONICS CO LTD [KR]) 13 April 2011 (2011-04-13) * paragraphs [0037], [0037], [0041] * | 1-12 | |
| X | EP 1 458 150 A2 (NTT DOCOMO INC [JP]) 15 September 2004 (2004-09-15) * claim 1 * | 1-12 | |

The present search report has been drawn up for all claims

| Place of search | Date of completion of the search | Examiner |
|---|---|---|
| Berlin | 8 June 2023 | Goller, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

24

## ANNEX TO THE EUROPEAN SEARCH REPORT
## ON EUROPEAN PATENT APPLICATION NO.

EP 23 16 1902

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2023

| Patent document cited in search report | | | Publication date | Patent family member(s) | | | Publication date |
|---|---|---|---|---|---|---|---|
| EP 2782372 | A1 | | 24-09-2014 | CN | 103108308 | A | 15-05-2013 |
| | | | | EP | 2782372 | A1 | 24-09-2014 |
| | | | | US | 2014328300 | A1 | 06-11-2014 |
| | | | | WO | 2013071819 | A1 | 23-05-2013 |
| EP 1681895 | B1 | | 13-04-2011 | CN | 1809010 | A | 26-07-2006 |
| | | | | EP | 1681895 | A2 | 19-07-2006 |
| | | | | JP | 4313367 | B2 | 12-08-2009 |
| | | | | JP | 2006203888 | A | 03-08-2006 |
| | | | | KR | 100597422 | B1 | 05-07-2006 |
| | | | | US | 2006159049 | A1 | 20-07-2006 |
| EP 1458150 | A2 | | 15-09-2004 | CN | 1531280 | A | 22-09-2004 |
| | | | | EP | 1458150 | A2 | 15-09-2004 |
| | | | | JP | 2004282172 | A | 07-10-2004 |
| | | | | US | 2004179489 | A1 | 16-09-2004 |
| | | | | US | 2008013483 | A1 | 17-01-2008 |

EPO FORM P0459

For more details about this annex : see Official Journal of the European Patent Office, No. 12/82